# EUROPEAN PATENT APPLICATION

(11) **EP 3 742 693 A1**
(43) Date of publication of application: **25.11.2020**
(21) Application number: 18900795.8
(22) Date of filing: 06.11.2018
(51) Int. Cl.: H04L 29/06

(54) **INFORMATION INDICATION METHOD AND APPARATUS, AND COMPUTER STORAGE MEDIUM**

(30) Priority: 19.01.2018 WO PCT/CN2018/073334
(71) Applicant: GUANGDONG OPPO MOBILE TELECOMMUNICATIONS CORP., LTD., Wusha, Chang'an Dongguan, Guangdong 523860 (CN)
(72) Inventor: TANG, Hai, Dongguan, Guangdong 523860 (CN)
(74) Representative: Novagraaf Technologies
(86) International application number: PCT/CN2018/114186
(87) International publication number: WO 2019/140983

(57) **Abstract**

Disclosed in the present application are an information indication method and apparatus, and a computer storage medium. The method comprises: a terminal sends first indication information to a base station, the first indication information being used for indicating the size of security information supported or preferred by the terminal; or the terminal sends first indication information to a core network, and sends the first indication information to the base station via the core network, the first indication information being used for indicating the size of security information supported or preferred by the terminal, wherein the size of the security information is used for the base station to perform data decoding and to perform integrity protection verification.

## Description

### TECHNICAL FIELD

The present application relates to the field of wireless communication technology, and in particular, to an information indication method and apparatus, and a computer storage medium.

### BACKGROUND

In order to meet people's pursuit of speed, latency, high-speed mobility, energy efficiency of the services, and the diversity and complexity of services in future life, the 3rd Generation Partnership Project (3GPP) International Standards Organization began to develop 5th Generation (5G) mobile communication technology.

The main application scenarios of 5G mobile communication technology are: Enhance Mobile Broadband (eMBB), Ultra Reliable Low Latency Communication (URLLC), and massive Machine Type Communication (mMTC).

5G mobile communication technology is also called a New Radio (NR) communication technology. When NR is deployed early, complete NR coverage is difficult to achieve, so that a typical network coverage is a combination of Long Term Evolution (LTE) coverage and NR coverage. In addition, in order to protect early investment of mobile operators in LTE, a tight interworking working mode between LTE and NR was proposed. Of course, NR cells may also be deployed independently.

In LTE, there is no requirement for integrity protection of Data Resource Bearer (DRB), but the requirement for integrity protection of DRB is added in NR. Each Service Data Unit (SDU) of Packet Data Convergence Protocol (PDCP) must carry an additional integrity protection check code (MAC-I) for integrity protection check. The size of the MAC-I in LTE is 32 bits. Currently, the size of the MAC-I in NR may be 32 bits or 64 bits. How to determine by the network side the size of MAC-I supported or preferred by a terminal side is a problem to be solved.

### SUMMARY

To solve the above technical problems, embodiments of the present application provide an information indication method and apparatus, and a computer storage medium.

An information indication method provided by an embodiment of the present application includes:
sending, by a terminal, first indication information to a base station, the first indication information being used for indicating a size of security information supported or preferred by the terminal;
wherein the security information includes an integrity protection check code and/or key.

In an embodiment of the present application, the sending, by the terminal, the first indication information to the base station includes:
sending, by the terminal, the first indication information to the base station through a Radio Resource Control (RRC) message, during a process of establishing, by the terminal, an RRC connection;
wherein, the RRC message is an RRC message sent by the terminal to the base station before Access Stratum (AS) security activation.

In an embodiment of the present application, the RRC message is an RRC connection establishment request message or an RRC connection establishment completion message.

In an embodiment of the present application, in a case where the first indication information indicates the size of the security information supported by the terminal:
the first indication information is used to select, by the base station, a size of security information between the base station and the terminal according to the size of the security information supported by the terminal, and configure, in a command of AS security activation, the size of the security information for an AS layer selected by the base station for the terminal.

In an embodiment of the present application, in a case where the first indication information indicates the size of the security information preferred by the terminal:
the first indication information is used to perform, by the base station, data decoding and integrity protection verification or data decryption according to the size of the security information preferred by the terminal.

An information indication method provided by an embodiment of the present application includes:
receiving, by a base station, first indication information sent by a terminal, the first indication information being used for indicating a size of the security information supported or preferred by the terminal;
wherein, the security information includes an integrity protection check code and/or key.

In an embodiment of the present application, the receiving, by the base station, the first indication information sent by the terminal, includes:
receiving, by the base station, the first indication information sent by the terminal through an RRC message, during a process of establishing, by the terminal, an RRC connection;
wherein, the RRC message is an RRC message sent by the terminal to the base station before AS security activation.

In an embodiment of the present application, the RRC message is an RRC connection establishment request message or an RRC connection establishment completion message.

In an embodiment of the present application, in a case of switching, the method further includes:
sending, by the base station, the first indication information to a target base station through a message of a switching process; or,
sending, by the base station, the first indication information to a core network through the message of the switching process, so that the core network sends the first indication information to the target base station through the message of the switching process.

In an embodiment of the present application, in a case where the first indication information indicates the size of the security information supported by the terminal:
the first indication information is used to select, by the base station, a size of security information between the base station and the terminal according to the size of the security information supported by the terminal, and configure, in a command of AS security activation, the size of the security information for an AS layer selected by the base station for the terminal.

In an embodiment of the present application, in a case where the first indication information indicates the size of the security information preferred by the terminal:
the first indication information is used to perform, by the base station, data decoding and integrity protection verification or data decryption according to the size of the security information preferred by the terminal.

An information indication method provided by an embodiment of the present application includes:
sending, by a terminal, first indication information to a core network, and sending the first indication information to a base station via the core network, the first indication information being used for indicating a size of security information supported or preferred by the terminal;
wherein, the security information includes an integrity protection check code and/or key.

In an embodiment of the present application, the sending, by the terminal, the first indication information to the core network, includes:
sending, by the terminal, the first indication information to the core network through a registration request message, when performing network registration.

In an embodiment of the present application, the sending, by the terminal, the first indication information to the core network, includes:
sending, by the terminal, the first indication information to the core network through a request message of updating a location area, when updating the location area.

In an embodiment of the present application, the sending the first indication information to the base station via the core network, includes:
sending, by the core network, the first indication information to the base station through a message of a process of establishing an initial context, during the process of establishing the initial context.

In an embodiment of the present application, in a case where the first indication information indicates the size of the security information supported by the terminal:
the first indication information is used to select, by the core network, a size of security information between the core network and the terminal according to the size of the security information supported by the terminal, and configure, in a command of NAS security activation, the size of the security information for an NAS layer selected by the core network for the terminal; and/or,
the first indication information is used to select, by the base station, a size of security information between the base station and the terminal according to the size of the security information supported by the terminal, and configure, in a command of AS security activation, the size of the security information for an AS layer selected by the base station for the terminal.

In an embodiment of the present application, in a case where the first indication information indicates the size of the security information preferred by the terminal:
the first indication information is used to perform, by the base station, data decoding and integrity protection verification or data decryption according to the size of the security information preferred by the terminal.

An information indication method provided by an embodiment of the present application includes:
receiving, by a base station, first indication information sent by a core network, the first indication information being used for indicating a size of the security information supported or preferred by a terminal;
wherein, the security information includes an integrity protection check code and/or key.

In an embodiment of the present application, the receiving, by the base station, the first indication information sent by the core network, includes:
receiving, by the base station, the first indication information sent by the core network through a message of a process of establishing an initial context, during the process of establishing the initial context.

In an embodiment of the present application, in a case of switching, the method further includes:
sending, by the base station, the first indication information to a target base station through a message of a switching process; or,
sending, by the base station, the first indication information to the core network through the message of the switching process, so that the core network sends the first indication information to the target base station through the message of the switching process.

In an embodiment of the present application, in a case where the first indication information indicates the size of the security information supported by the terminal:
the first indication information is used to select, by the core network, a size of security information between the core network and the terminal according to the size of the security information supported by the terminal, and configure, in a command of NAS security activation, the size of the security information for an NAS layer selected by the core network for the terminal; and/or,
the first indication information is used to select, by the base station, a size of security information between the base station and the terminal according to the size of the security information supported by the terminal, and configure, in a command of AS security activation, the size of the security information for an AS layer selected by the base station for the terminal.

In an embodiment of the present application, in a case where the first indication information indicates the size of the security information preferred by the terminal:
the first indication information is used to perform, by the base station, data decoding and integrity protection verification or data decryption according to the size of the security information preferred by the terminal.

An information indication apparatus provided by an embodiment of the present application includes:
a sending unit, configured to: send first indication information to a base station, the first indication information being used for indicating a size of security information supported or preferred by a terminal;
wherein the security information includes an integrity protection check code and/or key.

In an embodiment of the present application, the sending unit is configured to: send the first indication information to the base station through an RRC message, during a process of establishing an RRC connection;
wherein, the RRC message is an RRC message sent by the terminal to the base station before AS security activation.

In an embodiment of the present application, the RRC message is an RRC connection establishment request message or an RRC connection establishment completion message.

In an embodiment of the present application, in a case where the first indication information indicates the size of the security information supported by the terminal:
the first indication information is used to select, by the base station, a size of security information between the base station and the terminal according to the size of the security information supported by the terminal, and configure, in a command of AS security activation, the size of the security information for an AS layer selected by the base station for the terminal.

In an embodiment of the present application, in a case where the first indication information indicates the size of the security information preferred by the terminal:
the first indication information is used to perform, by the base station, data decoding and integrity protection verification or data decryption according to the size of the security information preferred by the terminal.

An information indication apparatus provided by an embodiment of the present application includes:
a receiving unit, configured to: receive first indication information sent by a terminal, the first indication information being used for indicating a size of the security information supported or preferred by the terminal;
wherein, the security information includes an integrity protection check code and/or key.

In an embodiment of the present application, the receiving unit is configured to: receive the first indication information sent by the terminal through an RRC message, during a process of establishing an RRC connection;
wherein, the RRC message is an RRC message sent by the terminal to the base station before AS security activation.

In an embodiment of the present application, the RRC message is an RRC connection establishment request message or an RRC connection establishment completion message.

In an embodiment of the present application, the apparatus further includes:
a sending unit, configured to: send the first indication information to a target base station through a message of a switching process; or, send the first indication information to a core network through the message of the switching process, so that the core network sends the first indication information to the target base station through the message of the switching process.

In an embodiment of the present application, in a case where the first indication information indicates the size of the security information supported by the terminal:
the apparatus further includes: a selecting unit, configured to: select a size of security information between the base station and the terminal according to the size of the security information supported by the terminal, and configure, in a command of AS security activation, the size of the security information for an AS layer selected by the base station for the terminal.

In an embodiment of the present application, in a case where the first indication information indicates the size of the security information preferred by the terminal:
the apparatus further includes: an integrity protection unit, configured to perform data decoding and integrity protection verification or data decryption according to the size of the security information preferred by the terminal.

An information indication apparatus provided by an embodiment of the present application includes:
a sending unit, configured to: send first indication information to a core network, and send the first indication information to a base station via the core network, the first indication information being used for indicating a size of security information supported or preferred by a terminal;
wherein, the security information includes an integrity protection check code and/or key.

In an embodiment of the present application, the sending unit is configured to: send the first indication information to the core network through a registration request message, when performing network registration.

In an embodiment of the present application, the sending unit is configured to: send the first indication information to the core network through a request message of updating a location area, when updating the location area.

In an embodiment of the present application, the sending the first indication information to the base station via the core network, includes:
sending, by the core network, the first indication information to the base station through a message of a process of establishing an initial context, during the process of establishing the initial context.

In an embodiment of the present application, in a case where the first indication information indicates the size of the security information supported by the terminal:
the first indication information is used to select, by the core network, a size of security information between the core network and the terminal according to the size of the security information supported by the terminal, and configure, in a command of NAS security activation, the size of the security information for an NAS layer selected by the core network for the terminal; and/or,
the first indication information is used to select, by the base station, a size of security information between the base station and the terminal according to the size of the security information supported by the terminal, and configure, in a command of AS security activation, the size of the security information for an AS layer selected by the base station for the terminal.

In an embodiment of the present application, in a case where the first indication information indicates the size of the security information preferred by the terminal:
the first indication information is used to perform, by the base station, data decoding and integrity protection verification or data decryption according to the size of the security information preferred by the terminal.

An information indication apparatus provided by an embodiment of the present application includes:
a receiving unit, configured to: receive first indication information sent by a core network, the first indication information being used for indicating a size of the security information supported or preferred by a terminal;
wherein, the security information includes an integrity protection check code and/or key.

In an embodiment of the present application, the receiving unit is configure to: receive the first indication information sent by the core network through a message of a process of establishing an initial context, during the process of establishing the initial context.

In an embodiment of the present application, the apparatus further includes:
a sending unit, configured to: send the first indication information to a target base station through a message of a switching process; or, send the first indication information to the core network through the message of the switching process, so that the core network sends the first indication information to the target base station through the message of the switching process.

In an embodiment of the present application, in a case where the first indication information indicates the size of the security information supported by the terminal:
the first indication information is used to select, by the core network, a size of security information between the core network and the terminal according to the size of the security information supported by the terminal, and configure, in a command of NAS security activation, the size of the security information for an NAS layer selected by the core network for the terminal; and/or,
the first indication information is used to select, by the base station, a size of security information between the base station and the terminal according to the size of the security information supported by the terminal, and configure, in a command of AS security activation, the size of the security information for an AS layer selected by the base station for the terminal.

In an embodiment of the present application, in a case where the first indication information indicates the size of the security information preferred by the terminal:
the apparatus further includes: an integrity protection unit, configured to perform, data decoding and integrity protection verification or data decryption according to the size of the security information preferred by the terminal.

A computer storage medium provided by an embodiment of the present application has computer executable instructions stored thereon, and when the computer executable instructions are executed by a processor, the above information indication method is implemented.

In the implementations of the embodiment of the present application, a terminal sends first indication information to a base station, the first indication information being used for indicating the size of the security information supported or preferred by the terminal; or the terminal sends first indication information to a core network, and sends the first indication information to the base station via the core network, the first indication information being used for indicating the size of security information supported or preferred by the terminal, wherein the size of the security information is used for the base station to perform data decoding and to perform integrity protection verification. By using the implementations of the embodiment of the present application, the size of the security information reported by the terminal (that is, the size of MAC-I and/or the size of a key) is provided to the network side, so that the base station may correctly perform data decoding and data packet integrity protection verification, as well as correctly perform data decryption.

### BRIEF DESCRIPTION OF THE DRAWINGS

The drawings described here are used to provide a further understanding of the present application and form a part of the present application. The schematic embodiments and descriptions of the present application are used to explain the present application and do not constitute an undue limitation on the present application. In the drawings:
FIG. 1 is a first schematic flowchart of an information indication method according to an embodiment of this application;
FIG. 2 is a second schematic flowchart of an information indication method according to an embodiment of the present application;
FIG. 3 is a third schematic flowchart of an information indication method according to an embodiment of the present application;
FIG. 4 is a fourth schematic flowchart of an information indication method according to an embodiment of the present application;
FIG. 5 is a first schematic diagram of the structural composition of the information indication apparatus according to an embodiment of the present application;
FIG. 6 is a second schematic diagram of the structural composition of the information indication apparatus according to an embodiment of the present application;
FIG. 7 is a third schematic diagram of the structural composition of the information indication apparatus according to an embodiment of the present application;
FIG. 8 is a fourth schematic diagram of the structural composition of the information indication apparatus according to an embodiment of the present application;
FIG. 9 is a schematic structural diagram of a computer device according to an embodiment of the present application.

### DETAILED DESCRIPTION

In order to understand the features and technical contents of the embodiments of the present application in more detail, the implementation of the embodiments of the present application is described in detail below in conjunction with the drawings. The accompanying drawings are for reference only and are not intended to limit the embodiments of the present application.

The implementations of the embodiments of the present application are mainly applied to 5G mobile communication systems. Of course, the implementations of the embodiments of the present application are not limited to 5G mobile communication systems, but may also be applied to other types of mobile communication systems. The following describes the main application scenarios in the 5G mobile communication system:
1) eMBB scenario: eMBB aims at users' access to multimedia content, services and data, and its business demand is growing rapidly. Since eMBB may be deployed in different scenarios, such as indoors, urban areas, and rural areas, and differences in business capabilities and requirements are also relatively large, so the business must be analyzed in conjunction with specific deployment scenarios.
2) URLLC scenario: typical applications of URLLC include: industrial automation, power automation, telemedicine operation, traffic safety guarantee, etc.
3) mMTC scenario: typical characteristics of URLLC include: high connection density, small data volume, delay-insensitive services, low cost and long service life of modules.

In 5G, since the size of MAC-I may be 32bit or 64bit, the network side and the terminal side need to negotiate the size of MAC-I.

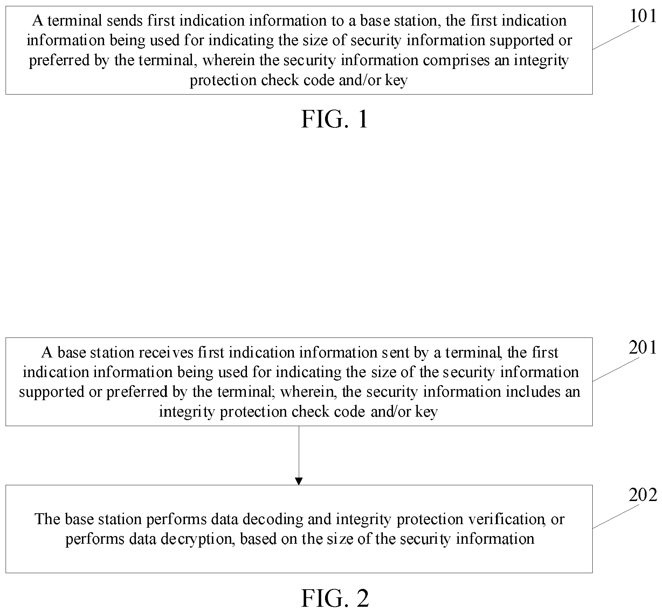

FIG. 1 is a first schematic flowchart of an information indication method according to an embodiment of the present application. The information indication method of this embodiment is applied to a terminal side. As shown in FIG. 1, the information indication method includes the following steps:
Step 101, a terminal sends first indication information to a base station, the first indication information being used for indicating the size of security information supported or preferred by the terminal; wherein the security information comprises an integrity protection check code and/or key.

In an embodiment of the present application, the terminal may be any device that may communicate with a network, such as a mobile phone, a tablet computer, a notebook computer, or a desktop computer.

In an embodiment of the present application, the base station may be, but not limited to, gNB in a 5G system.

In an embodiment of the present application, the first indication information is used to indicate the size of the security information supported or preferred by the terminal, for example, whether the size of the security information is 32bit or 64bit.

In an embodiment of the present application, the terminal sending the first indication information to the base station may be implemented in the following manner:
the terminal sends the first indication information to the base station through a Radio Resource Control (RRC) message, during a process of establishing, by the terminal, an RRC connection.

For example, the RRC message is an RRC connection establishment request message (MSG3) or an RRC connection establishment complete message (MSG5).

In an embodiment of the present application, in a case where the first indication information indicates the size of the security information supported by the terminal:
the first indication information is used to select, by the base station, the size of security information between the base station and the terminal according to the size of the security information supported by the terminal, and configure, in a command of AS security activation, the size of the security information for an AS layer selected by the base station for the terminal.

For example: a UE reports the size of MAC-I it supports; the base station selects a MAC-I size used between the base station and the UE according to the MAC-I size reported and supported by the UE; and configures the MAC-I size for an AS layer finally selected for the UE. It should be noted that, in the above example, it is also applicable if the MAC-I is replaced with a secret key.

In an embodiment of the present application, in a case where the first indication information indicates the size of the security information preferred by the terminal:
the first indication information is used to perform, by the base station, data decoding and integrity protection verification or data decryption according to the size of the security information preferred by the terminal.

For example: the UE reports its preferred MAC-I size; according to the MAC-I size preferred by the UE, the terminal uses the indicated MAC-I size for packet packing when performing data integrity protection on a bearer; the base station analyzes the data and performs integrity protection verification according to the MAC-I size preferred by the UE. It should be noted that, in the above example, it is also applicable if the MAC-I is replaced with a secret key.

FIG. 2 is a second schematic flowchart of an information indication method according to an embodiment of the present application. The information indication method in this embodiment is applied to a base station side. As shown in FIG. 2, the information indication method includes the following steps:
Step 201, a base station receives first indication information sent by a terminal, the first indication information being used for indicating a size of the security information supported or preferred by the terminal; wherein, the security information includes an integrity protection check code and/or key.

In an embodiment of the present application, the terminal may be any device that may communicate with a network, such as a mobile phone, a tablet computer, a notebook computer, or a desktop computer.

In an embodiment of the present application, the base station may be, but not limited to, gNB in a 5G system.

In an embodiment of the present application, the first indication information is used to indicate the size of the security information supported or preferred by the terminal, for example, whether the size of the security information is 32bit or 64bit.

In an embodiment of the present application, the base station receiving the first indication information sent by the terminal may be implemented in the following manner:
the base station receives the first indication information sent by the terminal through an RRC message, during a process of establishing, by the terminal, an RRC connection; wherein, the RRC message is an RRC message sent by the terminal to the base station before AS security activation.

For example, the RRC message is an RRC connection establishment request message or an RRC connection establishment completion message.

Step 202, the base station performs data decoding and integrity protection verification, or performs data decryption, based on the size of the security information.

In an embodiment of the present application, in the case of switching, the above base station refers to a source base station, and the method further includes:
the base station sends the first indication information to a target base station through a message of a switching process; or,
the base station sends the first indication information to a core network through the message of the switching process, so that the core network sends the first indication information to the target base station through the message of the switching process.

In this way, the target base station may perform data decoding and integrity protection verification or decrypt data based on the size of the security information.

In an embodiment of the present application, in a case where the first indication information indicates the size of the security information supported by the terminal:

the first indication information is used to select, by the base station, a size of security information between the base station and the terminal according to the size of the security information supported by the terminal, and configure, in a command of AS security activation, the size of the security information for an AS layer selected by the base station for the terminal.

For example: a UE reports the size of MAC-I it supports; the base station selects a MAC-I size used between the base station and the UE according to the MAC-I size reported and supported by the UE; and configures the MAC-I size for an AS layer finally selected for the UE. It should be noted that, in the above example, it is also applicable if the MAC-I is replaced with a secret key.

In an embodiment of the present application, in a case where the first indication information indicates the size of the security information preferred by the terminal:
the first indication information is used to perform, by the base station, data decoding and integrity protection verification or data decryption according to the size of the security information preferred by the terminal.

For example: the UE reports its preferred MAC-I size; according to the MAC-I size preferred by the UE, the terminal uses the indicated MAC-I size for packet packing when performing data integrity protection on a bearer; the base station analyzes the data and performs integrity protection verification according to the MAC-I size preferred by the UE. It should be noted that, in the above example, it is also applicable if the MAC-I is replaced with a secret key.

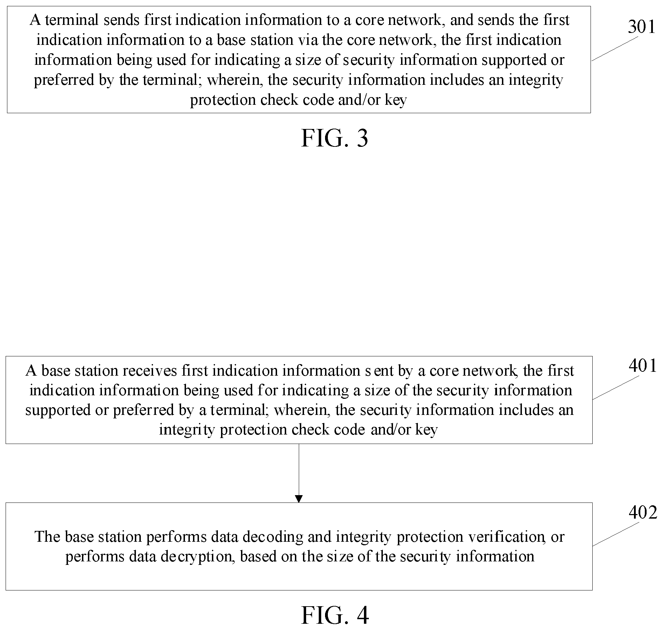

FIG. 3 is a third schematic flowchart of an information indication method according to an embodiment of the present application. The information indication method in this embodiment is applied to the terminal side. As shown in FIG. 3, the information indication method includes the following steps:

Step 301, a terminal sends first indication information to a core network, and sending the first indication information to a base station via the core network, the first indication information being used for indicating a size of security information supported or preferred by the terminal; wherein, the security information includes an integrity protection check code and/or key.

In an embodiment of the present application, the terminal may be any device that may communicate with a network, such as a mobile phone, a tablet computer, a notebook computer, or a desktop computer.

In an embodiment of the present application, the base station may be, but not limited to, gNB in a 5G system.

In an embodiment of the present application, the first indication information is used to indicate the size of the security information supported or preferred by the terminal, for example, whether the size of the security information is 32bit or 64bit.

In an embodiment of the present application, the terminal sending the first indication information to the core network may be implemented in the following manners:
Manner 1, the terminal sends the first indication information to the core network through a registration request message, when performing network registration.
Manner 2, the terminal sends the first indication information to the core network through a request message of updating a location area, when updating the location area.

In an embodiment of the present application, the core network sending the first indication information to the base station may be implemented in the following manner:
the core network sends the first indication information to the base station through a message of a process of establishing an initial context, during the process of establishing the initial context.

In an embodiment of the present application, in a case where the first indication information indicates the size of the security information supported by the terminal:

the first indication information is used to select, by the core network, a size of security information between the core network and the terminal according to the size of the security information supported by the terminal, and configure, in a command of NAS security activation, the size of the security information for an NAS layer selected by the core network for the terminal; and/or,
the first indication information is used to select, by the base station, a size of security information between the base station and the terminal according to the size of the security information supported by the terminal, and configure, in a command of AS security activation, the size of the security information for an AS layer selected by the base station for the terminal.

For example: a UE reports the size of MAC-I it supports;
the core network selects a MAC-I size used between the core network and the UE according to the MAC-I size reported and supported by the UE; and configures the MAC-I size for an NAS layer finally selected for the UE. It should be noted that, in the above example, it is also applicable if the MAC-I is replaced with a secret key;
the base station selects a MAC-I size used between the base station and the UE according to the MAC-I size reported and supported by the UE; and configures the MAC-I size for an AS layer finally selected for the UE. It should be noted that, in the above example, it is also applicable if the MAC-I is replaced with a secret key.

In an embodiment of the present application, in a case where the first indication information indicates the size of the security information preferred by the terminal:
the first indication information is used to perform, by the base station, data decoding and integrity protection verification or data decryption according to the size of the security information preferred by the terminal.

For example: the UE reports its preferred MAC-I size; according to the MAC-I size preferred by the UE, the terminal uses the indicated MAC-I size for packet packing when performing data integrity protection on a bearer; the base station analyzes the data and performs integrity protection verification according to the MAC-I size preferred by the UE. It should be noted that, in the above example, it is also applicable if the MAC-I is replaced with a secret key.

FIG. 4 is a fourth schematic flowchart of an information indication method according to an embodiment of the present application. The information indication method of this embodiment is applied to a base station side. As shown in FIG. 4, the information indication method includes the following steps:
Step 401, a base station receives first indication information sent by a core network, the first indication information being used for indicating a size of the security information supported or preferred by a terminal; wherein, the security information includes an integrity protection check code and/or key.

In an embodiment of the present application, the terminal may be any device that may communicate with a network, such as a mobile phone, a tablet computer, a notebook computer, or a desktop computer.

In an embodiment of the present application, the base station may be, but not limited to, gNB in a 5G system.

In an embodiment of the present application, the first indication information is used to indicate the size of the security information supported or preferred by the terminal, for example, whether the size of the security information is 32bit or 64bit.

In an embodiment of the present application, the base station receiving the first indication information sent by the core network, includes:
the base station receives the first indication information sent by the core network through a message of a process of establishing an initial context, during the process of establishing the initial context.

Step 402, the base station performs data decoding and integrity protection verification, or performs data decryption, based on the size of the security information.

In an embodiment of the present application, in the case of switching, the above base station refers to a source base station, and the method further includes:
the base station sends the first indication information to a target base station through a message of a switching process; or,
the base station sends the first indication information to the core network through the message of the switching process, so that the core network sends the first indication information to the target base station through the message of the switching process.

In this way, the target base station may perform data decoding and integrity protection verification or decrypt data based on the size of the security information.

In an embodiment of the present application, in a case where the first indication information indicates the size of the security information supported by the terminal:
the first indication information is used to select, by the core network, a size of security information between the core network and the terminal according to the size of the security information supported by the terminal, and configure, in a command of NAS security activation, the size of the security information for an NAS layer selected by the core network for the terminal; and/or,
the first indication information is used to select, by the base station, a size of security information between the base station and the terminal according to the size of the security information supported by the terminal, and configure, in a command of AS security activation, the size of the security information for an AS layer selected by the base station for the terminal.

In an embodiment of the present application, in a case where the first indication information indicates the size of the security information preferred by the terminal:
the first indication information is used to perform, by the base station, data decoding and integrity protection verification or data decryption according to the size of the security information preferred by the terminal.

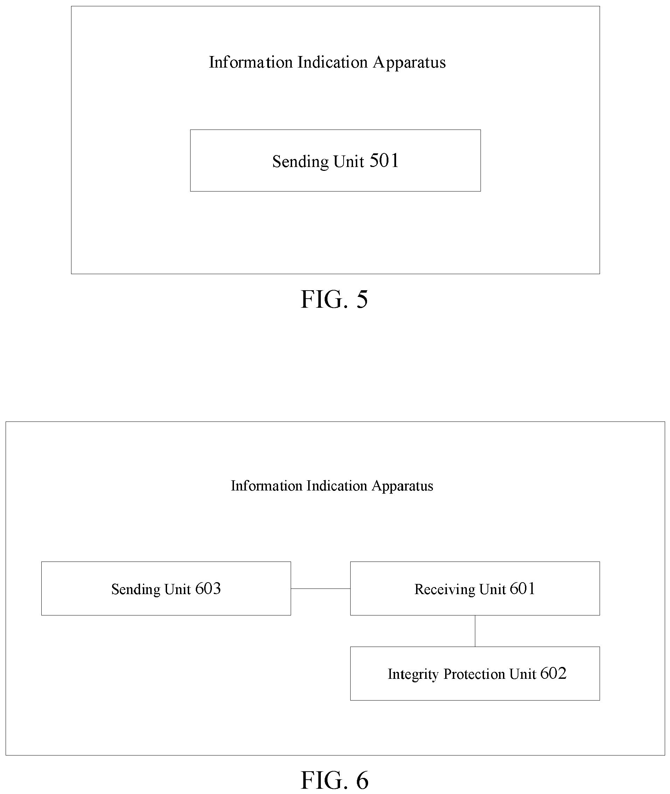

FIG. 5 is a first schematic structural diagram of an information indication apparatus according to an embodiment of the present application. The information indication apparatus of this embodiment is applied to a terminal side. As shown in FIG. 5, the information indication apparatus includes:
a sending unit 501, configured to: send first indication information to a base station, the first indication information being used for indicating a size of security information supported or preferred by a terminal;
wherein the security information includes an integrity protection check code and/or key.

In an embodiment, the sending unit 501 is configured to: send the first indication information to the base station through an RRC message, during a process of establishing an RRC connection;
wherein, the RRC message is an RRC message sent by the terminal to the base station before AS security activation.

In an embodiment, the RRC message is an RRC connection establishment request message or an RRC connection establishment completion message.

In an embodiment, in a case where the first indication information indicates the size of the security information supported by the terminal:
the first indication information is used to select, by the base station, a size of security information between the base station and the terminal according to the size of the security information supported by the terminal, and configure, in a command of AS security activation, the size of the security information for an AS layer selected by the base station for the terminal.

In an embodiment, in a case where the first indication information indicates the size of the security information preferred by the terminal:
the first indication information is used to perform, by the base station, data decoding and integrity protection verification or data decryption according to the size of the security information preferred by the terminal.

Those skilled in the art should understand that the functions realized by the units in the information indication apparatus shown in FIG. 5 may be understood by referring to the related description of the foregoing information indication method. The function of each unit in the information indication apparatus shown in FIG. 5 may be realized by a program running on a processor, or by a specific logic circuit.

FIG. 6 is a second schematic structural diagram of an information indication apparatus according to an embodiment of the present application. The information indication apparatus of this embodiment is applied to a base station side. As shown in FIG. 6, the information indication apparatus includes:
a receiving unit 601, configured to: receive first indication information sent by a terminal, the first indication information being used for indicating a size of the security information supported or preferred by the terminal; wherein, the security information includes an integrity protection check code and/or key.

In an embodiment, the receiving unit 601 is configured to: receive the first indication information sent by the terminal through an RRC message, during a process of establishing an RRC connection;
wherein, the RRC message is an RRC message sent by the terminal to the base station before AS security activation.

In an embodiment, the RRC message is an RRC connection establishment request message or an RRC connection establishment completion message.

In an embodiment, the apparatus further includes:
a sending unit 603, configured to: send the first indication information to a target base station through a message of a switching process; or, send the first indication information to a core network through the message of the switching process, so that the core network sends the first indication information to the target base station through the message of the switching process.

In an embodiment, in a case where the first indication information indicates the size of the security information supported by the terminal:
the apparatus further includes: a selecting unit (not shown in the figure), configured to: select the size of security information between the base station and the terminal according to the size of the security information supported by the terminal, and configure, in a command of AS security activation, the size of the security information for an AS layer selected by the base station for the terminal.

In an embodiment, in a case where the first indication information indicates the size of the security information preferred by the terminal:
the apparatus further includes: an integrity protection unit 602, configured to perform data decoding and integrity protection verification or data decryption according to the size of the security information preferred by the terminal.

Those skilled in the art should understand that the functions realized by the units in the information indication apparatus shown in FIG. 6 may be understood by referring to the related description of the foregoing information indicating method. The function of each unit in the information indication apparatus shown in FIG. 6 may be realized by a program running on a processor, or by a specific logic circuit.

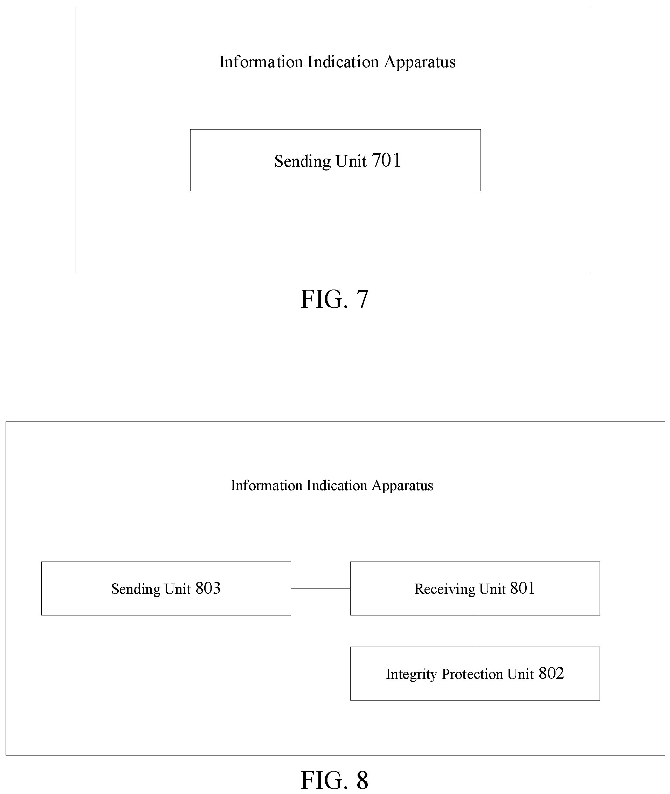

FIG. 7 is a schematic structural diagram of the information indication apparatus of the embodiment of the present application. The information indication apparatus of this embodiment is applied to the terminal side. As shown in FIG. 7, the information indication apparatus includes:
a sending unit 701, configured to: send first indication information to a core network, and send the first indication information to a base station via the core network, the first indication information being used for indicating a size of security information supported or preferred by a terminal;
wherein, the security information includes an integrity protection check code and/or key.

In an embodiment, the sending unit 701 is configured to: send the first indication information to the core network through a registration request message, when performing network registration.

In an embodiment, the sending unit 701 is configured to: send the first indication information to the core network through a request message of updating a location area, when updating the location area.

In an embodiment, the sending the first indication information to the base station via the core network, includes:
the core network sends the first indication information to the base station through a message of a process of establishing an initial context, during the process of establishing the initial context.

In an embodiment, in a case where the first indication information indicates the size of the security information supported by the terminal:
the first indication information is used to select, by the core network, a size of security information between the core network and the terminal according to the size of the security information supported by the terminal, and configure, in a command of NAS security activation, the size of the security information for an NAS layer selected by the core network for the terminal; and/or,
the first indication information is used to select, by the base station, a size of security information between the base station and the terminal according to the size of the security information supported by the terminal, and configure, in a command of AS security activation, the size of the security information for an AS layer selected by the base station for the terminal.

In an embodiment, in a case where the first indication information indicates the size of the security information preferred by the terminal:
the first indication information is used to perform, by the base station, data decoding and integrity protection verification or data decryption according to the size of the security information preferred by the terminal.

Those skilled in the art should understand that the functions realized by the units in the information indication apparatus shown in FIG. 7 may be understood by referring to the related description of the foregoing information indicating method. The function of each unit in the information indication apparatus shown in FIG. 7 may be realized by a program running on a processor, or by a specific logic circuit.

FIG. 8 is a fourth schematic structural diagram of the information indication apparatus of the embodiment of the present application. The information indication apparatus of this embodiment is applied to the base station side. As shown in FIG. 8, the information indication apparatus includes:
a receiving unit 801, configured to: receive first indication information sent by a core network, the first indication information being used for indicating a size of the security information supported or preferred by a terminal;
wherein, the security information includes an integrity protection check code and/or key.

In an embodiment, the receiving unit 801 is configure to: receive the first indication information sent by the core network through a message of a process of establishing an initial context, during the process of establishing the initial context.

In an embodiment, the apparatus further includes:
a sending unit 803, configured to: send the first indication information to a target base station through a message of a switching process; or, send the first indication information to the core network through the message of the switching process, so that the core network sends the first indication information to the target base station through the message of the switching process.

In an embodiment, in a case where the first indication information indicates the size of the security information supported by the terminal:
the first indication information is used to select, by the core network, a size of security information between the core network and the terminal according to the size of the security information supported by the terminal, and configure, in a command of NAS security activation, the size of the security information for an NAS layer selected by the core network for the terminal; and/or,
the first indication information is used to select, by the base station, a size of security information between the base station and the terminal according to the size of the security information supported by the terminal, and configure, in a command of AS security activation, the size of the security information for an AS layer selected by the base station for the terminal.

In an embodiment, in a case where the first indication information indicates the size of the security information preferred by the terminal:
the apparatus further includes: an integrity protection unit 802, configured to perform, data decoding and integrity protection verification or data decryption according to the size of the security information preferred by the terminal.

Those skilled in the art should understand that the functions realized by the units in the information indication apparatus shown in FIG. 8 may be understood by referring to the related description of the foregoing information indicating method. The function of each unit in the information indication apparatus shown in FIG. 8 may be realized by a program running on a processor, or may be realized by a specific logic circuit.

If the above-mentioned information indication apparatus in the embodiment of the present application is implemented in the form of a software function module and sold or used as an independent product, it may also be stored in a computer-readable storage medium. Based on this understanding, the implementations of the embodiments of the present application may be embodied in the form of software products in essence or part of contributions to the prior art. The computer software product is stored in a storage medium and includes several instructions. A computer device (which may be a personal computer, server, or network device, etc.) executes all or part of the methods described in the embodiments of the present application. The foregoing storage media include various media that may store program codes, such as a U disk, a mobile hard disk, a Read-Only Memory (ROM), a magnetic disk, or an optical disk. In this way, the embodiments of the present application are not limited to any specific combination of hardware and software.

Correspondingly, an embodiment of the present application also provides a computer storage medium in which computer-executable instructions are stored. When the computer-executable instructions are executed by a processor, the above-mentioned information indication method of the embodiment of the present application is implemented.

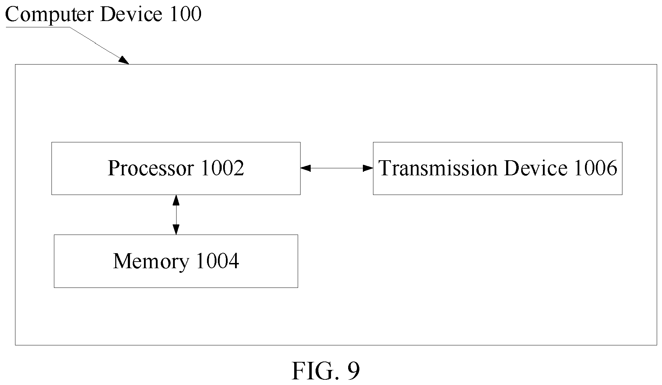

FIG. 9 is a schematic structural diagram of a computer device according to an embodiment of the present application. The computer device may be a terminal or a network device.

As shown in FIG. 9, a computer device 100 may include one or more (only one is shown in the figure) processor 1002 (the processor 1002 may include but is not limited to a processing apparatus such as Micro Controller Unit (MCU) or a Field Programmable Gate Array (FPGA)), a memory 1004 for storing data, and a transmission device 1006 for a communication function. A person of ordinary skill in the art may understand that the structure shown in FIG. 9 is merely an illustration, which does not limit the structure of the above electronic device. For example, the computer device 100 may also include more or fewer components than shown in FIG. 9 or have a different configuration from that shown in FIG. 9.

The memory 1004 may be used to store software programs and modules of application software, such as program instructions/modules corresponding to the methods in the embodiments of the present application, and the processor 1002 executes various functional applications and data processing by running the software programs and modules stored in the memory 1004, which achieves the above method. The memory 1004 may include a high-speed random access memory, and may also include a non-volatile memory, such as one or more magnetic storage devices, flash memories, or other non-volatile solid-state memories. In some examples, the memory 1004 may further include memories remotely provided with respect to the processor 1002, and these remote memories may be connected to the computer device 100 through a network. Examples of the above network include but are not limited to the Internet, intranet, local area network, mobile communication network, and combinations thereof.

The transmission device 1006 is used to receive or transmit data via a network. The specific example of the network described above may include a wireless network provided by a communication provider of the computer device 100. In one example, the transmission device 1006 includes a Network Interface Controller (NIC), which can be connected to other network devices through a base station to communicate with the Internet. In one example, the transmission device 1006 may be a Radio Frequency (RF) module, which is used to communicate with the Internet in a wireless manner.

The implementations described in the embodiments of the present application may be arbitrarily combined without conflict.

In the several embodiments provided in this application, it should be understood that the disclosed method and smart device may be implemented in other ways. The device embodiments described above are only schematic. For example, the division of the unit is only a division of logical functions. In actual implementation, there may be another division manner, for example, multiple units or components may be combined, or may be integrated into another system, or some features can be ignored, or not implemented. In addition, the coupling or direct coupling or communication connection between the displayed or discussed components may be through some interfaces, and the indirect coupling or communication connection of the device or unit may be electrical, mechanical, or other forms.

The units described as separate components may or may not be physically separated, and the components displayed as units may or may not be physical units, that is, they may be located in one place or distributed to multiple network units. Some or all of the units may be selected according to actual needs to achieve the purpose of the solution of this embodiment.

In addition, the functional units in the embodiments of the present application may all be integrated into one second processing unit, or each unit may be separately used as a unit, or two or more units may be integrated into one unit; the above integrated unit can be implemented in the form of hardware, or in the form of hardware plus software functional units.

The above is only the specific implementation of this application, but the scope of protection of this application is not limited to this, any person skilled in the art can easily think of changes or replacements within the technical scope disclosed in this application. It should be covered by the scope of protection of this application.

## Claims

1. A method for information indication, comprising:
sending, by a terminal to a base station, first indication information, the first indication information being used for indicating a size of security information supported or preferred by the terminal;
wherein the security information comprises an integrity protection check code and/or key.

2. The method according to claim 1, wherein, the sending, by the terminal to the base station, the first indication information comprises:
sending, by the terminal to the base station, the first indication information through a Radio Resource Control (RRC) message, during a process of establishing, by the terminal, an RRC connection;
wherein, the RRC message is an RRC message sent by the terminal to the base station before Access Stratum (AS) security activation.

3. The method according to claim 2, wherein, the RRC message is an RRC connection establishment request message or an RRC connection establishment completion message.

4. The method according to any one of claims 1 to 3, wherein, in a case where the first indication information indicates the size of the security information supported by the terminal:
the first indication information is used to select, by the base station, a size of security information between the base station and the terminal according to the size of the security information supported by the terminal, and configure for the terminal, in a command of AS security activation, the size of the security information for an AS layer selected by the base station.

5. The method according to any one of claims 1 to 3, wherein, in a case where the first indication information indicates the size of the security information preferred by the terminal:
the first indication information is used to perform, by the base station, data decoding and integrity protection verification or data decryption according to the size of the security information preferred by the terminal.

6. A method for information indication, comprising:
receiving, by a base station, first indication information sent by a terminal, the first indication information being used for indicating a size of the security information supported or preferred by the terminal;
wherein, the security information comprises an integrity protection check code and/or key.

7. The method according to claim 6, wherein, the receiving, by the base station, the first indication information sent by the terminal, comprises:
receiving, by the base station, the first indication information sent by the terminal through an RRC message, during a process of establishing, by the terminal, an RRC connection;
wherein, the RRC message is an RRC message sent by the terminal to the base station before AS security activation.

8. The method according to claim 7, wherein, the RRC message is an RRC connection establishment request message or an RRC connection establishment completion message.

9. The method according to any one of claims 6 to 8, wherein, in a case of switching, the method further comprises:
sending, by the base station to a target base station, the first indication information through a message of a switching process; or,
sending, by the base station to a core network, the first indication information through the message of the switching process, so that the core network sends the first indication information to the target base station through the message of the switching process.

10. The method according to any one of claims 6 to 9, in a case where the first indication information indicates the size of the security information supported by the terminal:
the first indication information is used to select, by the base station, a size of security information between the base station and the terminal according to the size of the security information supported by the terminal, and configure for the terminal, in a command of AS security activation, the size of the security information for an AS layer selected by the base station.

11. The method according to any one of claims 6 to 9, in a case where the first indication information indicates the size of the security information preferred by the terminal:
the first indication information is used to perform, by the base station, data decoding and integrity protection verification or data decryption according to the size of the security information preferred by the terminal.

12. A method for information indication, comprising:
sending, by a terminal to a core network, first indication information, and sending, by the core network to a base station, the first indication information, the first indication information being used for indicating a size of security information supported or preferred by the terminal;
wherein, the security information comprises an integrity protection check code and/or key.

13. The method according to claim 12, wherein, the sending, by the terminal to the core network, the first indication information, comprises:
sending, by the terminal to the core network, the first indication information through a registration request message, during performing network registration.

14. The method according to claim 12, wherein, the sending, by the terminal to the core network, the first indication information, comprises:
sending, by the terminal to the core network, the first indication information through a request message of updating a location area, during updating the location area.

15. The method according to any one of claims 12 to 14, wherein, the sending, by the core network to the base station, the first indication information, comprises:
sending, by the core network to the base station, the first indication information through a message of a process of establishing an initial context, during the process of establishing the initial context.

16. The method according to any one of claims 12 to 15, wherein, in a case where the first indication information indicates the size of the security information supported by the terminal:
the first indication information is used to select, by the core network, a size of security information between the core network and the terminal according to the size of the security information supported by the terminal, and configure for the terminal, in a command of NAS security activation, the size of the security information for an NAS layer selected by the core network; and/or,
the first indication information is used to select, by the base station, a size of security information between the base station and the terminal according to the size of the security information supported by the terminal, and configure for the terminal, in a command of AS security activation, the size of the security information for an AS layer selected by the base station.

17. The method according to any one of claims 12 to 15, wherein, in a case where the first indication information indicates the size of the security information preferred by the terminal:
the first indication information is used to perform, by the base station, data decoding and integrity protection verification or data decryption according to the size of the security information preferred by the terminal.

18. A method for information indication, comprising:
receiving, by a base station, first indication information sent by a core network, the first indication information being used for indicating a size of the security information supported or preferred by a terminal;
wherein, the security information comprises an integrity protection check code and/or key.

19. The method according to claim 18, wherein, the receiving, by the base station, the first indication information sent by the core network, comprises:
receiving, by the base station, the first indication information sent by the core network through a message of a process of establishing an initial context, during the process of establishing the initial context.

20. The method according to claim 18 or claim 19, wherein, in a case of switching, the method further comprises:
sending, by the base station to a target base station, the first indication information through a message of a switching process; or,
sending, by the base station to the core network, the first indication information through the message of the switching process, so that the core network sends the first indication information to the target base station through the message of the switching process.

21. The method according to any one of claims 18 to 20, wherein, in a case where the first indication information indicates the size of the security information supported by the terminal:
the first indication information is used to select, by the core network, a size of security information between the core network and the terminal according to the size of the security information supported by the terminal, and configure for the terminal, in a command of NAS security activation, the size of the security information for an NAS layer selected by the core network; and/or,
the first indication information is used to select, by the base station, a size of security information between the base station and the terminal according to the size of the security information supported by the terminal, and configure for the terminal, in a command of AS security activation, the size of the security information for an AS layer selected by the base station.

22. The method according to any one of claims 18 to 20, wherein, in a case where the first indication information indicates the size of the security information preferred by the terminal:
the first indication information is used to perform, by the base station, data decoding and integrity protection verification or data decryption according to the size of the security information preferred by the terminal.

23. An apparatus for information indication, comprising:
a sending unit, configured to: send first indication information to a base station, the first indication information being used for indicating a size of security information supported or preferred by a terminal;
wherein the security information comprises an integrity protection check code and/or key.

24. The apparatus according to claim 23, wherein, the sending unit is configured to: send the first indication information to the base station through an RRC message, during a process of establishing an RRC connection;
wherein, the RRC message is an RRC message sent by the terminal to the base station before AS security activation.

25. The apparatus according to claim 24, wherein, the RRC message is an RRC connection establishment request message or an RRC connection establishment completion message.

26. The apparatus according to any one of claims 23 to 25, wherein, in a case where the first indication information indicates the size of the security information supported by the terminal:
the first indication information is used to select, by the base station, a size of security information between the base station and the terminal according to the size of the security information supported by the terminal, and configure for the terminal, in a command of AS security activation, the size of the security information for an AS layer selected by the base station.

27. The apparatus according to any one of claims 23 to 25, wherein, in a case where the first indication information indicates the size of the security information preferred by the terminal:
the first indication information is used to perform, by the base station, data decoding and integrity protection verification or data decryption according to the size of the security information preferred by the terminal.

28. An apparatus for information indication, comprising:
a receiving unit, configured to: receive first indication information sent by a terminal, the first indication information being used for indicating a size of the security information supported or preferred by the terminal;
wherein, the security information comprises an integrity protection check code and/or key.

29. The apparatus according to claim 28, wherein, the receiving unit is configured to: receive the first indication information sent by the terminal through an RRC message, during a process of establishing an RRC connection;
wherein, the RRC message is an RRC message sent by the terminal to the base station before AS security activation.

30. The apparatus according to claim 29, wherein, the RRC message is an RRC connection establishment request message or an RRC connection establishment completion message.

31. The apparatus according to any one of claims 28 to 30, wherein, the apparatus further comprises:
a sending unit, configured to: send the first indication information to a target base station through a message of a switching process; or, send the first indication information to a core network through the message of the switching process, so that the core network sends the first indication information to the target base station through the message of the switching process.

32. The apparatus according to any one of claims 28 to 30, wherein, in a case where the first indication information indicates the size of the security information supported by the terminal:
the apparatus further comprises: a selecting unit, configured to: select a size of security information between the base station and the terminal according to the size of the security information supported by the terminal, and configure for the terminal, in a command of AS security activation, the size of the security information for an AS layer selected by the base station.

33. The apparatus according to any one of claims 28 to 30, wherein, in a case where the first indication information indicates the size of the security information preferred by the terminal:
the apparatus further comprises: an integrity protection unit, configured to perform data decoding and integrity protection verification or data decryption according to the size of the security information preferred by the terminal.

34. An apparatus for information indication, comprising:
a sending unit, configured to: send first indication information to a core network, to allow the core network to send the first indication information to a base station, the first indication information being used for indicating a size of security information supported or preferred by a terminal;
wherein, the security information comprises an integrity protection check code and/or key.

35. The apparatus according to claim 34, wherein, the sending unit is configured to: send the first indication information to the core network through a registration request message, during performing network registration.

36. The apparatus according to claim 34, wherein, the sending unit is configured to: send the first indication information to the core network through a request message of updating a location area, during updating the location area.

37. The apparatus according to any one of claims 34 to 36, wherein, the sending the first indication information to the base station via the core network, comprises:
sending, by the core network, the first indication information to the base station through a message of a process of establishing an initial context, during the process of establishing the initial context.

38. The apparatus according to any one of claims 34 to 37, wherein, in a case where the first indication information indicates the size of the security information supported by the terminal:
the first indication information is used to select, by the core network, a size of security information between the core network and the terminal according to the size of the security information supported by the terminal, and configure for the terminal, in a command of NAS security activation, the size of the security information for an NAS layer selected by the core network; and/or,
the first indication information is used to select, by the base station, a size of security information between the base station and the terminal according to the size of the security information supported by the terminal, and configure for the terminal, in a command of AS security activation, the size of the security information for an AS layer selected by the base station.

39. The apparatus according to any one of claims 34 to 37, wherein, in a case where the first indication information indicates the size of the security information preferred by the terminal:
the first indication information is used to perform, by the base station, data decoding and integrity protection verification or data decryption according to the size of the security information preferred by the terminal.

40. An apparatus for information indication, comprising:
a receiving unit, configured to: receive first indication information sent by a core network, the first indication information being used for indicating a size of the security information supported or preferred by a terminal;
wherein, the security information comprises an integrity protection check code and/or key.

41. The apparatus according to claim 40, wherein, the receiving unit is configure to: receive the first indication information sent by the core network through a message of a process of a process of establishing an initial context, during the process of establishing the initial context.

42. The apparatus according to any one of claims 40 to 41, wherein, the apparatus further comprises:
a sending unit, configured to: send the first indication information to a target base station through a message of a switching process; or, send the first indication information to the core network through the message of the switching process, so that the core network sends the first indication information to the target base station through the message of the switching process.

43. The apparatus according to any one of claims 40 to 42, wherein, in a case where the first indication information indicates the size of the security information supported by the terminal:
the first indication information is used to select, by the core network, a size of security information between the core network and the terminal according to the size of the security information supported by the terminal, and configure for the terminal, in a command of NAS security activation, the size of the security information for an NAS layer selected by the core network; and/or,
the first indication information is used to select, by the base station, a size of security information between the base station and the terminal according to the size of the security information supported by the terminal, and configure for the terminal, in a command of AS security activation, the size of the security information for an AS layer selected by the base station.

44. The apparatus according to any one of claims 40 to 42, wherein, in a case where the first indication information indicates the size of the security information preferred by the terminal:
the apparatus further comprises: an integrity protection unit, configured to perform, data decoding and integrity protection verification or data decryption according to the size of the security information preferred by the terminal.

45. A computer storage medium, storing computer executable instructions, and when the computer-executable instructions are executed by a processor, steps of the method of any one of claims 1 to 5, or steps of the method of any one of claims 6 to 11, or steps of the method of any one of claims 12 to 17, or steps of the method of any one of claims 18 to 22 are implemented.
